(19) Europäisches Patentamt / European Patent Office / Office européen des brevets

(11) **EP 3 350 560 B1**

(12) **EUROPÄISCHE PATENTSCHRIFT**

(45) Veröffentlichungstag und Bekanntmachung des Hinweises auf die Patenterteilung:
**02.10.2019 Patentblatt 2019/40**

(51) Int Cl.:
*G01M 3/28* (2006.01)    *E03B 7/00* (2006.01)
*F17D 5/02* (2006.01)    *G01F 1/34* (2006.01)

(21) Anmeldenummer: **16753601.0**

(22) Anmeldetag: **28.07.2016**

(86) Internationale Anmeldenummer:
**PCT/EP2016/067998**

(87) Internationale Veröffentlichungsnummer:
**WO 2017/045819 (23.03.2017 Gazette 2017/12)**

(54) **VERFAHREN UND VORRICHTUNG ZUR ERMITTLUNG EINES LECKAGEWERTS EINES LEITUNGSABSCHNITTS**

METHOD AND DEVICE FOR DETERMINING A LEAK RATE OF A SECTION OF PIPING

PROCÉDÉ ET DISPOSITIF PERMETTANT DE DÉTERMINER UN TAUX DE FUITE D'UNE SECTION DE CONDUITE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.09.2015 DE 102015115664**

(43) Veröffentlichungstag der Anmeldung:
**25.07.2018 Patentblatt 2018/30**

(73) Patentinhaber: **Turn-Off Metering GmbH**
**97789 Oberleichtersbach (DE)**

(72) Erfinder: **HELFRICH, Gerhard**
**97789 Oberleichtersbach (DE)**

(74) Vertreter: **advotec.**
**Patent- und Rechtsanwälte**
**Beethovenstrasse 5**
**97080 Würzburg (DE)**

(56) Entgegenhaltungen:
**DE-A1- 19 942 185    JP-A- S5 827 041**
**US-A- 6 116 082**

**Beschreibung**

Die Erfindung betrifft ein Verfahren zur Ermittlung eines Leckagewerts eines Leitungsabschnitts, in dem ein Fluid, insbesondere Trinkwasser, gefördert werden kann. Weiter betrifft die Erfindung eine Vorrichtung zur Verwendung bei der Durchführung des erfindungsgemäßen Verfahrens.

An Fluid fördernden Leitungen, insbesondere an Trinkwasserleitungen, können unerwünschte Leckagen auftreten, an denen das Fluid ungewollt aus der Leitung austritt. Solche Leckagen sind insbesondere bei Wasserleitungen von großem Nachteil, da sie aufgrund der Anordnung der Wasserleitungen im Erdreich vielfach unbemerkt bleiben und kostenintensive und umweltschädliche Wasserverluste verursachen. Das erfindungsgemäße Verfahren und die erfindungsgemäße Vorrichtung sind deshalb insbesondere, jedoch keineswegs ausschließlich, zur Ermittlung des Leckagewerts von Leckagen an Trinkwasserleitungen vorgesehen.

Für die Ortung und Beurteilung von Leckagen an Wasserleitungen sind aus dem Stand der Technik verschiedene Techniken bekannt. So sind akustische Verfahren bekannt, bei denen die bei Austritt des Fluids aus der Leitung auftretende Geräusche mit Akustiksensoren geortet und gegebenenfalls auch in ihrer Qualität beurteilt werden können.

Diese akustischen Verfahren haben allerdings den Nachteil, dass sie relativ ungenau sind und manche Lecks aufgrund ihrer Lage, beispielsweise bei Auftreten eines Lecks an der Rohrunterseite, nur sehr schlecht bzw. gar nicht geortet werden können. Weiterhin ist es problematisch, dass an den zunehmend verbauten Kunststoffrohren Leckgeräusche nur in sehr geringem Maß auftreten. Außerdem kann die akustische Lecksuche durch Störgeräusche leicht behindert werden.

Weiterhin ist aus dem Stand der Technik die sogenannte Zonenmessung bekannt, bei der ein Leitungsabschnitt abgesperrt und anschließend aus einer Druckwasserquelle, beispielsweise über Schläuche und Hydranten, unter Druck stehendes Wasser in den zu prüfenden Leitungsabschnitt gefördert und eine Durchflussmessung durchgeführt wird. Derartige Zonenmessungen sind jedoch sehr aufwendig, da die Leitungen für die Druckwasserversorgung aufwendig montiert werden müssen.

Weiter sind aus dem Stand der Technik sogenannte Gastests bekannt, bei denen die Wasserleitung mit einem unter Druck stehenden Gas geflutet wird. An den Leckstellen tritt das Gas dann aus und kann mittels geeigneter Gassensoren an der Oberfläche geortet werden. Diese Gastests sind sehr aufwendig, da die Leitungen entsprechend entleert werden und druckdicht abgeschlossen werden müssen. Außerdem kann mit einem Gastest zwar die Lage aber nicht die Größe eines Lecks festgestellt werden.

Aus der DE 39 05 054 C1 ist ein Verfahren zur Ermittlung des Leckagewerts eines Leitungsabschnitts bekannt, das auf der Druckmessung im zu prüfenden Leitungsabschnitt beruht. In einem ersten Messschritt wird dabei die zu prüfende Leitung zunächst mit einem Anfangsdruck beaufschlagt und der durch die Leckage verursachte Druckabfall aufgezeichnet. Sobald der Druck im Leitungsabschnitt unterhalb eines Referenzdrucks abgefallen ist, wird die Leitung aus einer Druckwasserquelle mit unter Druck stehendem Wasser versorgt, so dass der Druck im Leitungsanstieg wieder ansteigt. Aus dem Vergleich der Druckabfallskurve und der Druckanstiegskurve kann dann eine Beurteilung der Leckage im Leitungsabschnitt abgeleitet werden.

Nachteilig an diesem Verfahren ist es wiederum, dass der zu prüfende Leitungsabschnitt während der Messung aus einer Quelle mit Druckwasser beaufschlagt werden muss, um den Druck wieder ansteigen zu lassen. Insofern ist auch hier wiederum der unerwünschte Aufwand zur Montage von zusätzlichen Druckwasserleitungen erforderlich.

Aufgabe der vorliegenden Erfindung ist es, ein Verfahren zur Ermittlung des unbekannten Leckagewerts eines zu prüfenden Leitungsabschnitts vorzuschlagen, das mit einfachen Mitteln sichere Ergebnisse liefert. Weiter ist es Aufgabe der vorliegenden Erfindung, eine Vorrichtung zur Durchführung des erfindungsgemäßen Verfahrens vorzuschlagen.

Diese Aufgaben werden durch ein Verfahren und eine Vorrichtung nach der Lehre der unabhängigen Hauptansprüche gelöst.

Vorteilhafte Ausführungsformen der Erfindung sind Gegenstand der Unteransprüche.

Das erfindungsgemäße Verfahren zur Ermittlung des Leckagewerts beruht gattungsgemäß auf der Messung von Druckkurven im zu prüfenden Leitungsabschnitt. Denn aus dem Stand der Technik wird dabei zumindest eine erste Druckkurve aufgenommen, bei der der Druckabfall im zu prüfenden Leitungsabschnitt ausgehend von einer oberen Druckgrenze bis zum Erreichen einer unteren Druckgrenze aufgenommen wird. Bei der Durchführung des erfindungsgemäßen Verfahrens wird ein Zuflussventil, insbesondere ein Absperrschieber, zur Erhöhung des Drucks im Leitungsabschnitt manuell geöffnet und manuell geschlossen. Zur Einstellung des oberen Druckniveaus wird der Absperrschieber, manuell von einem Bediener am ansonsten im Wesentlichen abgesperrten Leitungsabschnitt geöffnet, so dass durch nachströmendes Fluid der Druck auf das gewünschte Druckniveau angehoben wird. Die eigentliche Messung unter Aufnahme der ersten Druckkurve erfolgt dann nach dem manuellen Schließen des Absperrschiebers durch den Bediener, wobei der Druck durch das Leck aus dem Leitungsabschnitt austritt und damit den Druckabfall bis zum Erreichen der unteren Druckgrenze bewirkt.

In Abkehr zu dem aus dem Stand der Technik bekannten Druckmessverfahren wird dann aber nicht eine gesteuerte Druckanhebung unter Aufnahme des Druckanstiegs durchgeführt. Stattdessen wird der verschließbare Absperrschieber manuell von einem Bediener geöffnet und ohne eigentliche Messung der Druck im Leitungsabschnitt durch nachströmendes Fluid wieder bis zum Erreichen der oberen Druckgrenze angehoben. Nach Erreichen der oberen Druckgrenze wird der Absperrschieber wieder manuell geschlossen und eine zweite Druckkurve mit dem Druckabfall von der oberen Druckgrenze bis zur unteren Druckgrenze aufgenommen. Bei der Aufnahme der zweiten Druckkurve ist es erfindungsgemäß allerdings vorgesehen, dass zusätzlich ein Abflussventil mit bekanntem Leckagewert am zu prüfenden Leitungsabschnitt geöffnet wird. Insofern wird der Druckabfall bei Aufnahme der zweiten Druckkurve nicht nur durch den Austritt des Fluids durch das gegebenenfalls vorhandene Leck, sondern zusätzlich auch durch Austritt des Fluids durch das Abflussventil mit dem bekannten Leckagewert verursacht.

Nach Aufnahme der Messwerte der beiden Druckkurven erfolgt erfindungsgemäß eine Auswertung, wobei der unbekannte Leckagewert des Leitungsabschnitts in Relation zum bekannten Leckagewert des Abflussventils aus dem Messwertvergleich abgeleitet wird. Dies bedeutet mit anderen Worten, dass die Messwerte der beiden Druckkurven analytisch verglichen werden, wobei aus der Änderung der Druckkurven durch Öffnen des Abflussventils mit dem bekannten Leckagewert auf den unbekannten Leckagewert des Leitungsabschnitts zurückgeschlossen werden kann.

Einen besonderen Vorteil bietet das erfindungsgemäße Verfahren dadurch, dass zur Durchführung des Verfahrens keine zusätzlichen Leitungen zur Druckwasserversorgung des zu prüfenden Leitungsabschnitts verlegt werden müssen. Vielmehr ist es ausreichend, wenn das verschließbare Zuflussventil des zu prüfenden Leitungsabschnitts, beispielsweise der Absperrschieber eines zu prüfenden Wasserleitungsabschnitts, geöffnet und durch Nachströmen des Fluids der Druck vor Aufnahme der beiden Druckkurven jeweils auf das obere Druckniveau angehoben werden kann. Bei der eigentlichen Messung unter Aufnahme der Messwerte der beiden Druckkurven ist das Zuflussventil jeweils geschlossen, wobei die erste Druckkurve den Druckabfall alleine aufgrund der Leckagen des zu prüfenden Leitungsabschnitts repräsentiert, wohingegen die zweite Druckkurve den Druckabfall aufgrund der Leckagen und des Durchflusses durch das geöffnete Abflussventil repräsentiert. Bei der Durchführung des erfindungsgemäßen Verfahrens ist es dabei grundsätzlich ohne Belang, ob die erste oder die zweite Druckkurve zeitlich vorhergehend aufgenommen wird. Entscheidend ist allein, dass die beiden Druckkurven zur Auswertung zur Verfügung stehen. Die Aufnahme der beiden Druckkurven selbst ist zeitlich voneinander unabhängig.

In welcher Weise der Messwertvergleich im Verfahrensschritt e) des erfindungsgemäßen Verfahrens durchgeführt wird, ist grundsätzlich beliebig. Es lassen sich verschiedenste Verfahrensvarianten denken, bei denen unterschiedliche Arten von Messwerten ausgewertet werden. Besonders einfach lässt sich das erfindungsgemäße Verfahren durchführen, wenn im Verfahrensschritt e) die Druckabfallszeit der ersten Messkurve, die während des Druckabfalls zwischen der oberen Druckgrenze und der unteren Druckgrenze verstreicht, und die Druckabfallszeit der zweiten Messkurve, die während des Druckabfalls zwischen der oberen Druckgrenze und der unteren Druckgrenze verstreicht, ausgewertet werden.

Als Berechnungsformel zur Berechnung des gesuchten Leckagewerts des Leitungsabschnitts in Relation zum bekannten Leckagewert des Abflussventils unter Verwendung der gemessenen Druckabfallszeiten lässt sich folgende Gleichung angeben:

$$Lx = Lv * [t_2 \setminus (t_1 - t_2)]$$

Soweit bei Verwendung des Absperrschiebers eines Wasserleitungsabschnitts dieser nach dem Schließen nicht vollständig abgedichtet ist, wird die Messung durch das durch den undichten Absperrschieber einströmende Wasser verfälscht. Um solche Messfehler zu vermeiden, ist es deshalb besonders vorteilhaft, wenn nach Schließen des Absperrschiebers und vor bzw. nach der Durchführung der eigentlichen Druckkurvenaufnahme die Dichtigkeit des Absperrschiebers durch ein entsprechend geeignetes Prüfverfahren überprüft wird. Beispielsweise kann das dichte Abschließen des Absperrschiebers nach Erreichen der oberen Druckgrenze mittels akustischer Prüfverfahren überprüft werden, bei denen Durchflussgeräusche am Absperrschieber detektiert werden.

Wird die Dichtigkeit des Absperrschiebers mittels eines akustischen Prüfverfahrens überprüft, so erlaubt dies lediglich eine qualitative Abschätzung der Dichtqualität des Absperrschiebers. Um die Genauigkeit der Messung der Dichtigkeit des Absperrschiebers zu erhöhen und auch quantitative Aussagen über die Dichtqualität des Absperrschiebers zu ermöglichen kann nach Erreichen der unteren Druckgrenze das geöffnete Abflussventils geschlossen werden, wobei der zu prüfende Absperrschieber geschlossen bleibt. Damit ist der geprüfte Leitungsabschnitt im Prinzip abgesperrt, so dass Wasser weder zu- noch abströmen kann. Dann wird die Zeit bis zum erneuten Erreichen der oberen Druckgrenze gemessen. Bei hoher Dichtqualität wird bis zum erneuten Erreichen der oberen Druckgrenze eine sehr lange Zeit benötigt, da nur kein oder nur sehr wenig Wasser an dem geschlossenen Absperrschieber vorbeiströmt. Bei geringer Dichtqualität wird bis zum erneuten Erreichen der oberen Druckgrenze nur eine kurze Zeit benötigt, da aufgrund der geringen Dichtqualität viel Wasser an dem geschlossenen Absperrschieber vorbeiströmt.

Welche Art von Abflussventil bei Durchführung des erfindungsgemäßen Verfahrens eingesetzt wird, ist grundsätzlich beliebig, solange der Leckagewert des geöffneten Abflussventils bekannt ist. Besonders einfach und kostengünstig lässt sich das erfindungsgemäße Verfahren durchführen, wenn das Abflussventil an einem Ober- oder Unterflurhydranten eines Wasserleitungsabschnitts angeschlossen wird.

Zu welchem Zeitpunkt die für die Auswertung der Druckkurven erforderlichen oberen Druckgrenzen bzw. unteren Druckgrenzen festgelegt werden, ist grundsätzlich beliebig. So ist es durchaus denkbar, dass zunächst die Messkurven mit den Druckabfällen aufgenommen und erst anschließend das relevante Druckabfallsfenster mit der oberen Druckgrenze und der unteren Druckgrenze anhand der bereits aufgenommenen Messkurven festgelegt wird. Dadurch wird insbesondere verhindert, dass Messungen in unerwünschter Weise wiederholt werden müssen, weil beispielsweise die obere oder die untere Druckgrenze bei Durchführung der Messung nicht erreicht wurden.

Die erfindungsgemäße Vorrichtung zum Einsatz bei der Durchführung des Verfahrens wird durch einen Drucksensor zur Messung des Drucks im zu untersuchenden Leitungsabschnitt, einem Datenspeicher zur Abspeicherung der Messwerte der beiden Druckkurven, einem Abflussventil mit bekanntem Leckagewert und einer Auswerteeinrichtung zur Ermittlung des gesuchten Leckagewerts aus den Messwerten und dem bekannten Leckagewert charakterisiert. Zudem umfasst die erfindungsgemäße Vorrichtung ein Standrohr, das an einen Ober- oder Unterflurhydranten des zu prüfenden Wasserleitungsabschnitts angeschlossen werden kann. An dem Standrohr selbst ist dann das Abflussventil mit dem bekannten Leckagewert angeschlossen, so dass die Referenzleckage problemlos realisiert werden kann.

Bei Untersuchung von räumlich großflächig verlegten Leitungsnetzen, insbesondere Wasserleitungsnetzen, ist es vielfach unumgänglich, dass das verschließbare Zuflussventil und das Abflussventil mit bekanntem Leckagewert weit auseinanderliegend angeordnet werden. Dies ist insbesondere der Fall, wenn als Zuflussventil ein Absperrschieber verwendet wird, und das Abflussventil mit bekanntem Leckagewert an einen Ober- oder Unterflurhydranten des Wasserleitungsabschnitts angeordnet wird. Um eine Kommunikation zwischen diesen beiden Orten bei Durchführung des Messverfahrens zu ermöglichen, ist es besonders vorteilhaft, wenn die Vorrichtung eine Datenübertragungsschnittstelle aufweist, mit der die Messwerte des Drucksensors an eine von der Steuerung der Vorrichtung selbst entfernt anordenbare Nebenstelle übertragbar sind. Auf diese Weise ist es beispielsweise möglich, dass die Druckwerte mittels des Drucksensors im Bereich des Ober- oder Unterflurhydranten aufgenommen und über die Datenübertragungsschnittstelle an die Nebenstelle, die im Bereich des als Zuflussventil verwendeten Absperrschiebers angeordnet ist, übertragen werden. Alternativ oder additiv ist es außerdem vorteilhaft, wenn über die Datenübertragungsschnittstelle in umgekehrter Richtung Stellbefehle von der Nebenstelle an die Steuerung der Vorrichtung übertragbar sind. Auf diese Weise kann es insbesondere ermöglicht werden, dass das gesamte Messverfahren von einem einzigen Bediener durchgeführt wird, der beispielsweise den Absperrschieber manuell schließt und öffnet.

Der Aufbau der erfindungsgemäßen Vorrichtung wird erheblich dadurch vereinfacht, dass die Datenübertragungsschnittstelle eine drahtlose Datenübertragung ermöglicht. Insofern müssen dann zwischen der Vorrichtung selbst und der Nebenstelle keine Kabel verlegt werden. Weiterhin wird der Aufbau der erfindungsgemäßen Vorrichtung erheblich dadurch vereinfacht, dass die unterschiedlichen Bestandteile der Vorrichtung einzeln oder auch insgesamt netzunabhängig mit der notwendigen Energie versorgt werden. Dies kann durch Akkumulatoren erreicht werden, aus denen das Abflussventil und/oder die Datenübertragungsschnittstelle und/oder die Nebenstelle mit der notwendigen elektrischen Spannung versorgt werden.

Weiterhin ist es besonders vorteilhaft, wenn die Vorrichtung einen GPS-Empfänger umfasst, mit dem die Lagekoordinaten der Vorrichtung ermittelt, angezeigt und/oder abgespeichert werden können. Auf diese Weise kann zusammen mit den Messdaten auch die Position des überprüften Leitungsabschnitts ermittelt und protokolliert werden.

Bei bestimmten Leitungstypen, beispielsweise Gussrohren, kann es vorkommen, dass die Leitungen sich aufgrund ihrer Steifigkeit nur sehr gering ausdehnen können. Bei Beaufschlagung des Leitungsabschnitts mit Druck strömt bei diesen Rohren nur eine sehr geringe Fluidmenge nach. Bei Aufnahme der Druckkurven führt dies dazu, dass der Druck sehr schnell, meist sogar schlagartig abfällt, so dass eine Messung der Druckkurven nicht möglich ist. In diesen Fällen ist es vorteilhaft, wenn die Vorrichtung einen Druckspeicher oder ein Ausdehnungsgefäß umfasst, der an den abgesperrten Leitungsabschnitt anschließbar ist. Damit ist es möglich bei der Aufnahme der Messdaten einen schlagartigen Druckabfall zu vermeiden und dadurch die Messung der Druckkurven zu ermöglichen.

Eine Ausführungsform der Erfindung ist in den Zeichnungen schematisch dargestellt und wird nachfolgend beispielhaft erläutert.

Es zeigen:

**Fig. 1** den Ausschnitt eines Wasserversorgungsnetzes zur Wasserversorgung einer Vielzahl von Endverbrauchern in schematisierter Darstellung;

**Fig. 2** den Ausschnitt X des Wasserleitungsnetzes gemäß Fig. 1 bei Aufbau der erfindungsgemäßen Vorrichtung zur Durchführung des erfindungsgemäßen Verfahrens bei der Ermittlung des Leckagewerts Lx eines Leitungsabschnitts im schematisierten Querschnitt;

**Fig. 3** die beiden Druckabfallskurven zur Ermittlung des Leckagewerts des zu prüfenden Leitungsabschnitts in schematisierter Darstellung.

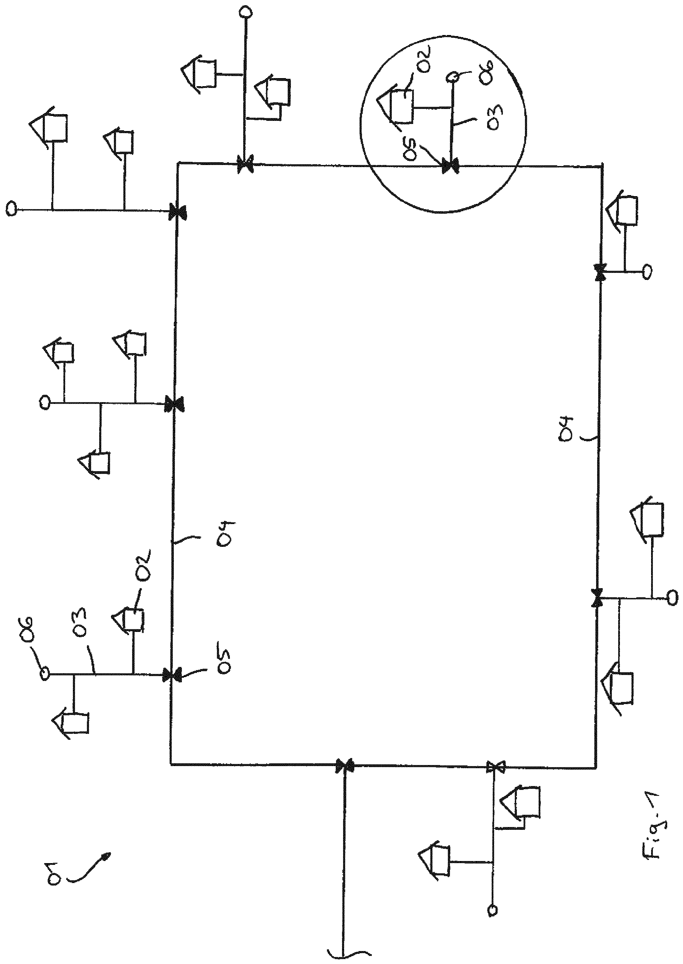

**Fig. 1** zeigt in schematisierter Darstellung einen Teil eines Wasserleitungsnetzes 01 zur Versorgung einer Vielzahl von Endverbrauchen 02 mit Frischwasser. Die Endverbraucher 02 sind dabei mittels Leitungsabschnitten 03 jeweils an eine Ringleitung 04 angeschlossen, wobei die Leitungsabschnitte 03 durch Betätigung von Absperrschiebern 05 von der Ringleitung 04 getrennt werden können. Außerdem ist am Ende jedes Leitungsabschnitts 03 ein Unter- oder Oberflurhydrant 06 vorgesehen, an dem Wasser aus dem Leitungsabschnitt 03 entnommen werden kann. Das erfindungsgemäße Verfahren und die erfindungsgemäße Vorrichtung sollen beispielhaft anhand des in dem Ausschnitt X eingezeichneten Leitungsabschnitts 03 nachfolgend erläutert werden. Dabei ist offensichtlich, dass es nicht auf die Leitungskonfiguration gemäß Fig. 1 beschränkt ist, sondern vielmehr beliebige Leitungskonfigurationen denkbar sind.

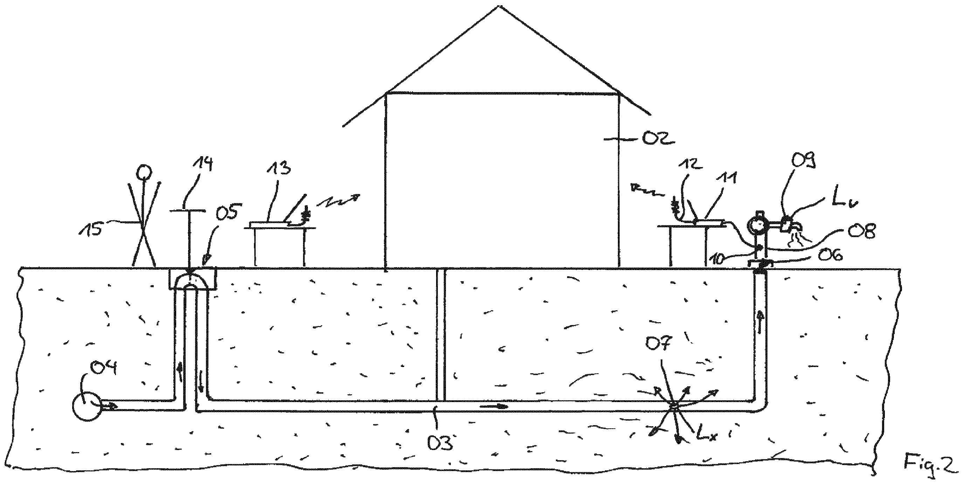

**Fig. 2** zeigt den Endverbraucher 02, den Leitungsabschnitt 03, die Ringleitung 04, den Absperrschieber 05 und den Unterflurhydranten 06 aus dem Ausschnitt X gemäß Fig. 1 in vergrößerter Darstellung. Zum Verständnis des erfindungsgemäßen Verfahrens soll angenommen werden, dass der Leitungsabschnitt 03 ein unterirdisches Leck 07 aufweist, wobei der Leckagewert Lx des Lecks 07 unbekannt ist und mittels Einsatz des erfindungsgemäßen Verfahrens ermittelt werden soll.

Zur Durchführung des erfindungsgemäßen Verfahrens wird zunächst am Unterflurhydranten 06 ein Standrohr 08 angebracht, über das Wasser aus dem Leitungsabschnitt 03 entnommen werden kann. An dem Standrohr 08 ist ein elektromechanisch schaltbares Abflussventil 09 mit bekanntem Leckagewert Lv angebracht. Beim Öffnen des Abflussventils 09 strömt also das Wasser mit definierter Ausströmleistung gemäß dem bekannten Leckagewert Lv aus dem Standrohr 08 aus.

Außerdem ist an dem Standrohr 08 ein Drucksensor 10 angebracht, mit dem der Wasserdruck im Standrohr 08 und damit zugleich auch entsprechend im Leitungsabschnitt 03 gemessen werden kann. Die Daten des Drucksensors 10 werden über ein Kabel an einen Industrie PC, der als Steuerung 11 der Vorrichtung dient, weitergeleitet, der mit einer drahtlosen Datenübertragungsschnittstelle 12 ausgestattet ist. Über die drahtlose Datenübertragungsschnittstelle 12 werden die Druckdaten des Drucksensors 10 per Funk an eine Nebenstelle 13 übertragen, wo die Messwerte des Drucksensors 10 als Druckkurven angezeigt und gespeichert werden können. Die Nebenstelle 13 befindet sich in unmittelbarer Nähe des Absperrschiebers 05, die mittels eines geeigneten Werkzeugs 14 vom Bediener 15 geöffnet und geschlossen werden kann.

Nachdem das Standrohr 08 montiert ist und geeignete Verkehrssicherungsmaßnahmen durch den Bediener 15 durchgeführt wurden, wird zunächst das Abflussventil 09 gespült und anschließend druckfest verschlossen. Danach öffnet der Bediener 15 mittels des Werkzeugs 14 den Absperrschieber 05 und erhöht den Wasserdruck im zu prüfenden Leitungsabschnitt 03 bis er eine obere Druckgrenze, von beispielsweise 7 bar, überschritten hat. Der Druckverlauf wird dem Bediener 15 dabei am Monitor der Nebenstelle 13 angezeigt.

Nach Erreichen der oberen Druckgrenze schließt der Bediener 15 mittels des Werkzeugs 14 den Absperrschieber 05, so dass kein weiteres Wasser aus der Ringleitung 04 in den zu prüfenden Leitungsabschnitt 03 nachströmen kann. Aufgrund des Lecks 07 tritt das unter Druck stehende Wasser kontinuierlich aus dem Leitungsabschnitt 03 aus, wodurch der Wasserdruck ausgehend vom Anfangsdruck solange abfällt, bis er eine untere Druckgrenze Pu unterschritten hat. Die dabei anfallenden Messwerte der Druckabfallskurve werden vom Drucksensor 10 detektiert, gespeichert und am Monitor der Nebenstelle 13 angezeigt.

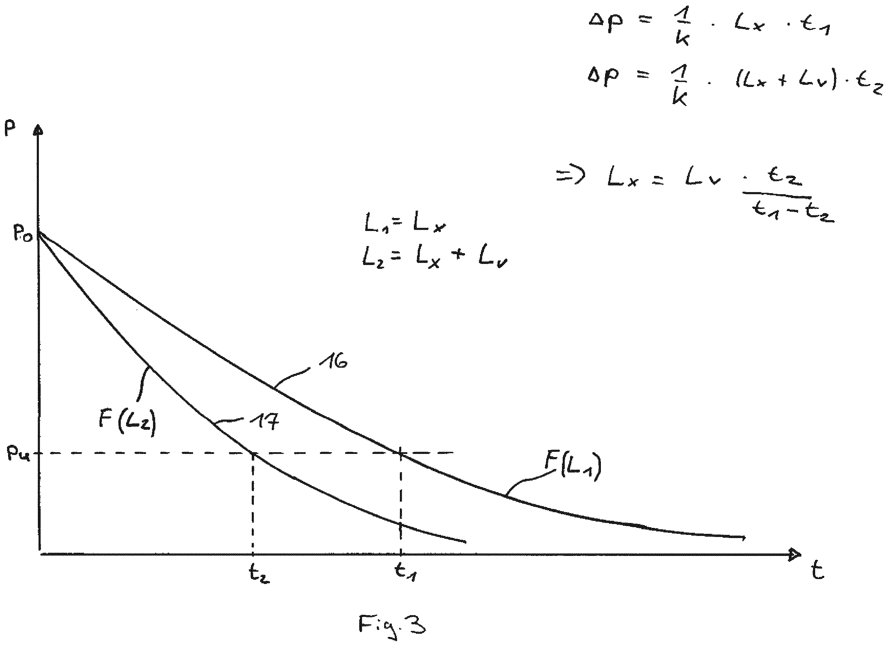

Sobald der Bediener 15 angezeigt bekommt, dass der Druck im Leitungsabschnitt 03 die untere Druckgrenze unterschritten hat, öffnet er den Absperrschieber 05 erneut, so dass der Wasserdruck wieder die obere Druckgrenze überschreitet. Vor Beginn der nächsten Messung öffnet der Bediener 15 durch drahtlose Übertragung eines Bedienbefehls von der Nebenstelle 13 an die Steuerung 11 das Abflussventil 09 und startet den Messvorgang zur Aufnahme der Druckabfallskurve. Da zusätzlich zum Leck 07 nunmehr auch durch das Abflussventil 09 Wasser ausströmt fällt der Druck im Leitungsabschnitt 03 entsprechend schneller. Sobald auch bei der zweiten Messung der Wasserdruck unter die untere Druckgrenze gefallen ist, ist der eigentliche Messvorgang abgeschlossen und der Bediener kann den zu prüfenden Leitungsabschnitt 03 durch Öffnen des Absperrschiebers 05 wieder an die Ringleitung 04 anschließen. Die beiden Druckkurven der oben beschriebenen Messungen sind beispielhaft in Fig. 3 dargestellt und werden nachfolgend kurz erläutert.

In **Fig. 3** ist beispielhaft der vom Drucksensor 10 aufgenommene Wasserdruck über die Zeit bei den beiden oben erläuterten Messungen angetragen. Die beiden Messkurven beginnen dabei jeweils mit dem Anfangsdruck an der oberen Druckgrenze Po, da es auf dem zeitlichen Ablauf der beiden Messungen hintereinander erfindungsgemäß nicht ankommt. Die erste Druckkurve 16 fällt ausgehend von der oberen Druckgrenze Po innerhalb der Druckabfallszeit $t_1$ auf das Niveau der unteren Druckgrenze Pu. Der Funktionszusammenhang zwischen Zeit und Druck ist dabei ein nicht linearer, wobei er im Bereich zwischen der oberen Druckgrenze Po und der unteren Druckgrenze Pu näherungsweise als linear angenommen werden kann. Die zweite Druckkurve 17 fällt innerhalb der Druckabfallszeit $t_2$ von der oberen Druckgrenze Po bis zur unteren Druckgrenze Pu. Die zweite Druckabfallszeit $t_2$ ist dabei naturgemäß kürzer, da die Gesamtleckage aufgrund des Öffnens des Abflussventils 09 entsprechend vergrößert ist.

Das erfindungsgemäße Verfahren beruht auf der näherungsweisen Annahme, dass der Druckabfall ∆p näherungsweise linear gemäß der Formel:

$$\Delta p = 1/k * L \,(Leckagewert) * t \,(Druckabfallszeit)$$

angegeben werden kann. Da für beide Druckkurven 16 und 17 der gleiche Druckabfall vorhanden ist ergibt sich daraus, dass die Summe der beiden Leckagewerte des Lecks 07 und des Abflussventils 09 multipliziert mit der zweiten Druckabfallszeit gleichgroß ist wie das Produkt aus dem Leckagewert des Lecks 07 alleine mal der ersten Druckabfallszeit, was sich formelmäßig wie folgt ausdrücken lässt:

$$(Lx + Lv) * t_2 = Lx * t_1$$

Im Ergebnis kann somit der gesuchte Leckagewert Lx des Lecks 07 nach Durchführung der Messung und Aufnahme der beiden Druckkurven 16 und 17 wie folgt angegeben werden:

$$Lx = Lv * [t_2/(t_1 - t_2)]$$

Beträgt die erste Druckabfallszeit $t_1$ der ersten Druckkurve 16 beispielsweise 120 Sekunden, die zweite Druckabfallszeit $t_2$ der zweiten Druckkurve 17 beispielsweise 50 Sekunden und sei der Leckagewert Lv des Abflussventils 09 beispielsweise 115 l/h so kann daraus geschlossen werden, dass der gesuchte Leckagewert Lx des Lecks 07 ungefähr 80 l/h beträgt ($115 * 50/70 \approx 80$). Im Ergebnis kann also mittels des erfindungsgemäßen Verfahrens und der erfindungsgemäßen Vorrichtung eine qualitative Aussage über die Größe des Lecks 07 gemacht werden, ohne dass dazu größere Messaufbauarbeiten notwendig sind.

**Patentansprüche**

1. Verfahren zur Ermittlung eines Leckagewerts (Lx) eines Wasserleitungsabschnitts (03), in dem Trinkwasser gefördert wird mit folgenden Verfahrensschritten:

   a) manuelles Öffnen eines verschließbaren Absperrschiebers (05) von einem Bediener (15) am ansonsten im Wesentlichen abgesperrten Wasserleitungsabschnitt (03), bis der Druck des Trinkwassers im Wasserleitungsabschnitt (03) durch nachströmendes Trinkwasser eine obere Druckgrenze (Po) überschritten hat;
   b) manuelles Schließen des Absperrschiebers (05) von dem Bediener (15), wobei anschließend Messwerte einer ersten Druckkurve (16) über die Zeit gemessen und gespeichert werden, bis der Druck des Trinkwassers im Wasserleitungsabschnitt (03) durch das Ausströmen des Trinkwassers am Leck (07) eine untere Druckgrenze (Pu) unterschritten hat, **gekennzeichnet durch**
   c) manuelles Öffnen des verschließbaren Absperrschiebers(05) von dem Bediener (15) des ansonsten im Wesentlichen abgesperrten Wasserleitungsabschnitts (03), bis der Druck des Trinkwassers im Wasserleitungsabschnitt (03) durch nachströmendes Trinkwasser die obere Druckgrenze (Po) überschritten hat,
   d) manuelles Schließen des Absperrschiebers (05) von dem Bediener (15) und Öffnen eines Abflussventils (09) mit bekanntem Leckagewert (Lv), wobei anschließend Messwerte einer zweiten Druckkurve (17) über die Zeit gemessen und gespeichert werden, bis der Druck des Trinkwassers im Wasserleitungsabschnitt (03) durch das Ausströmen des Trinkwassers am Leck (07) und das Ausströmen des Trinkwassers durch das Abflussventil (09) die untere Druckgrenze (Pu) unterschritten hat,
   e) Vergleichen von Messwerten der ersten Druckkurve (16) mit Messwerten der zweiten Druckkurve (17), wobei der unbekannte Leckagewert (Lx) des Lecks (07) in Relation zum bekannten Leckagewert (Lv) des Abflussventils (09) aus dem Messwertvergleich abgeleitet wird.

2. Verfahren nach Anspruch 1,
   **dadurch gekennzeichnet,**
   **dass** beim Messwertvergleich im Verfahrensschritt e) die Druckabfallszeit (t1) der ersten Messkurve (16), die während des Druckabfalls zwischen der oberen Druckgrenze (Po) und der unteren Druckgrenze (Pu) verstreicht, und die Druckabfallszeit (t2) der zweiten Messkurve (17), die während des Druckabfalls zwischen der oberen Druckgrenze (Po) und der unteren Druckgrenze (Pu) verstreicht, ausgewertet wird.

3. Verfahren nach Anspruch 2,
**dadurch gekennzeichnet,**
**dass** der gesuchte Leckagewert (Lx) des Lecks (07) in Relation zum bekannten Leckagewert (Lv) des Abflussventils aus den Druckabfallszeiten (t1, t2) gemäß der Formel berechnet wird:

$$Lx = Lv * [t2 \setminus (t1 - t2)]$$

4. Verfahren nach einem der Ansprüche 1 bis 3,
**dadurch gekennzeichnet,**
**dass** nach Schließen des Absperrschiebers (05) die Dichtigkeit des Absperrschiebers (05) durch ein insbesondere akustisches Prüfverfahren überprüft wird.

5. Verfahren nach einem der Ansprüche 1 bis 3,
**dadurch gekennzeichnet,**
**dass** zur Messung der Dichtigkeit des Absperrschiebers (05) nach Erreichen der unteren Druckgrenze (Pu) das geöffnete Abflussventil (09) geschlossen wird und der Absperrschieber (05) geschlossen bleibt, wobei die Zeit bis zum erneuten Erreichen der oberen Druckgrenze (Po) gemessen und daraus die Dichtqualität des Absperrschiebers (05) quantitativ abgeleitet wird.

6. Verfahren nach einem der Ansprüche 1 bis 5,
**dadurch gekennzeichnet,**
**dass** das Abflussventil (09) mit bekanntem Leckagewert (Lv) an einem Ober- oder Unterflurhydranten (06) eines Leitungsabschnitts (03) einer Wasserleitung angeschlossen wird.

7. Verfahren nach einem der Ansprüche 1 bis 6,
**dadurch gekennzeichnet,**
**dass** die obere Druckgrenze (Po) und/oder die unteren Druckgrenze (Pu) erst nach Aufnahme der Messkurven festgelegt werden.

8. Vorrichtung zum Einsatz bei der Durchführung des Verfahrens nach einem der Ansprüche 1 bis 7, mit

a) einem Drucksensor (10) zur Messung des Drucks im zu untersuchenden Wasserleitungsabschnitt (03);
b) einem Datenspeicher, in dem die Messwerte einer ersten und zweiten Druckkurve (16, 17) zumindest teilweise abgespeichert werden können;
c) zumindest einem Abflussventil (09) mit bekanntem Leckagewert (Lv); **gekennzeichnet durch**
d) eine Auswerteeinrichtung, welche derart ausgebildet ist, um das Verfahren nach einem der Ansprüche 1 bis 7 auszuführen, und mit der die Messwerte der ersten und zweiten Druckkurve (16) bei der Ermittlung des gesuchten Leckagewerts (Lx) des Lecks (07) in Relation zum bekannten Leckagewert (Lv) des Abflussventils (09) ausgewertet werden können; und durch
e) ein Standrohr, das an einem Ober- oder Unterflurhydranten (06) eines Wasserleitungsabschnitts (03) anschließbar ist, wobei am Standrohr (08) das Abflussventil (09) mit bekanntem Leckagewert (Lv) angeschlossen ist.

9. Vorrichtung nach Anspruch 8,
**dadurch gekennzeichnet,**
**dass** die Vorrichtung eine Datenübertragungsschnittstelle (12) aufweist, mit der die Messwerte des Drucksensors (10) an eine von der Steuerung (11) der Vorrichtung entfernt angeordnete Nebenstelle (13) übertragbar sind, und/oder mit der Stellbefehle von der Nebenstelle (13) an die Steuerung (11) der Vorrichtung übertragbar sind.

10. Vorrichtung nach Anspruch 9,
**dadurch gekennzeichnet,**
**dass** die Datenübertragungsschnittstelle (12) eine drahtlose Datenübertragung ermöglicht.

**11.** Vorrichtung nach einem der Ansprüche 8 bis 10,
**dadurch gekennzeichnet,**
**dass** die Vorrichtung einen oder mehreren Akkumulatoren zur netzfreien Energieversorgung des Abflussventil (09), der Datenübertragungsschnittstelle (12) und/oder der Nebenstelle (13) umfasst.

**12.** Vorrichtung nach einem der Ansprüche 8 bis 11,
**dadurch gekennzeichnet,**
**dass** die Vorrichtung einen GPS-Empfänger umfasst, mit dem die Lagekoordinaten der Vorrichtung ermittelt, angezeigt und/oder abgespeichert werden können.

**13.** Vorrichtung nach einem der Ansprüche 8 bis 12,
**dadurch gekennzeichnet,**
**dass** die Vorrichtung einen Druckspeicher oder ein Ausdehnungsgefäß umfasst, der an den abgesperrten Leitungsabschnitt (03) anschließbar ist.

**Claims**

**1.** A method for determining a leak rate (Lx) of a water pipe section (03) in which drinking water is conveyed, comprising the following method steps:

a) manually opening a closable shut-off valve (05) on the otherwise substantially shut-off water pipe section (03) by an operator (15) until the pressure of the drinking water in the water pipe section (03) has exceeded an upper pressure limit (Po) because of drinking water flowing in;
b) manually closing the shut-off valve (05) by the operator (15), measured values of a first pressure curve (16) being subsequently measured over time and stored, until the pressure of the drinking water in the water pipe section (03) has dropped below a lower pressure limit (Pu) because of the drinking water flowing out at the leak (07),
**characterised by** the steps of
c) manually opening the closable shut-off valve (05) of the otherwise substantially shut-off water pipe section (03) by the operator (15) until the pressure of the drinking water in the water pipe section (03) has exceeded the upper pressure limit (Po) because of drinking water flowing in,
d) manually closing the shut-off valve (05) by the operator (15) and opening an outlet valve (09) having a known leak rate (Lv), measured values of a second pressure curve (17) being subsequently measured over time and stored, until the pressure of the drinking water in the water pipe section (03) has dropped below the lower pressure limit (Pu) because of the drinking water flowing out at the leak (07) and the drinking water flowing out through the outlet valve (09),
e) comparing measured values of the first pressure curve (16) with measured values of the second pressure curve (17), the unknown leak rate (Lx) of the leak (07) being derived in relation to the known leak rate (Lv) of the outlet valve (09) from the comparison of the measured values.

**2.** The method according to claim 1,
**characterised in that**
when the measured values are compared in method step e), the pressure drop time (t1) of the first measured curve (16) that elapses during the pressure drop between the upper pressure limit (Po) and the lower pressure limit (Pu) and the pressure drop time (t2) of the second measured curve (17) that elapses during the pressure drop between the upper pressure limit (Po) and the lower pressure limit (Pu) are evaluated.

**3.** The method according to claim 2,
**characterised in that**
the sought-after leak rate (Lx) of the leak (07) is calculated in relation to the known leak rate (Lv) of the outlet valve from the pressure drop times (t1, t2) according to the formula:

$$Lx = Lv * [t2 \setminus (t1 - t2)]$$

**4.** The method according to any one of claims 1 to 3,

**characterised in that**
after closing the shut-off valve (05), the tightness of the shut-off valve (05) is tested by a testing method, in particular an acoustic testing method.

5. The method according to any one of claims 1 to 3,
**characterised in that**
in order to measure the tightness of the shut-off valve (05), the opened outlet valve (09) is closed once the lower pressure limit (Pu) has been reached and the shut-off valve (05) stays closed, the time until the upper pressure limit (Po) is reached again being measured and the sealing performance of the shut-off valve (05) being quantitatively derived therefrom.

6. The method according to any one of claims 1 to 5,
**characterised in that**
the outlet valve (09) having the known leak rate (Lv) is connected to a pillar hydrant or an underground hydrant (06) of a pipe section (03) of a water pipe.

7. The method according to any one of claims 1 to 6,
**characterised in that**
the upper pressure limit (Po) and/or the lower pressure limit (Pu) is/are set only after the measured curves have been recorded.

8. A device for use in the implementation of the method according to any one of claims 1 to 7, comprising

   a) a pressure sensor (10) for measuring the pressure in the water pipe section (03) to be examined;
   b) a data storage in which the measured values of first and second pressure curves (16, 17) are at least partially stored;
   c) at least one outlet valve (09) having a known leak rate (Lv); **characterised by**
   d) an evaluating unit which is configured so as to implement the method according to any one of claims 1 to 7 and by means of which the measured values of the first and second pressure curves (16) are evaluated when determining the sought-after leak rate (Lx) of the leak (07) in relation to the known leak rate (Lv) of the outlet valve (09); and by
   e) a stand pipe (08) which is connectable to a pillar hydrant or underground hydrant (06) of a water pipe section (03), the outlet valve (09) having the known leak rate (Lv) being connected to the stand pipe (08).

9. The device according to claim 8,
**characterised in that**
the device has a data transmission interface (12) by means of which the measured values of the pressure sensor (10) are transmitted to a substation (13) disposed remote from the control unit (11) of the device and/or by means of which control commands are transmitted from the substation (13) to the control unit (11) of the device.

10. The device according to claim 9,
**characterised in that**
the data transmission interface (12) allows wireless data transmission.

11. The device according to any one of claims 8 to 10,
**characterised in that**
the device comprises one or more accumulator batteries for off-grid power supply of the outlet valve (09), of the data transmission interface (12) and/or of the substation (13).

12. The device according to any one of claims 8 to 11,
**characterised in that**
the device comprises a GPS receiver by means of which the position coordinates of the device are determined, displayed and/or stored.

13. The device according to any one of claims 8 to 12,
**characterised in that**
the device comprises a pressure tank or an expansion tank which is connected to the shut-off pipe section (03).

**Revendications**

1. Procédé pour déterminer un taux de fuite (Lx) d'une section de conduite d'eau (03), dans laquelle de l'eau potable est transportée, comprenant les étapes de procédé suivantes :

   a) ouvrir manuellement une vanne d'arrêt (05) fermable par un opérateur (15), ladite vanne d'arrêt étant située sur la section de conduite d'eau (03) qui est autrement essentiellement bloquée, jusqu'à ce que la pression de l'eau potable dans la section de conduite d'eau (03) ait excédé une limite supérieure de pression (Po) à cause de l'eau potable qui entre ;
   b) fermer manuellement la vanne d'arrêt (05) par l'opérateur (15), des valeurs mesurées d'une première courbe de pression (16) étant ensuite mesurées au fil du temps et stockées jusqu'à ce que la pression de l'eau potable dans la section de conduite d'eau (03) ait tombée au-dessous d'une limite inférieure de pression (Pu) à cause de l'eau potable qui s'écoule par la fuite (07),
   **caractérisé par**
   c) ouvrir manuellement la vanne d'arrêt (05) fermable par l'opérateur (15), ladite vanne d'arrêt étant située sur la section de conduite d'eau (03) qui est autrement essentiellement bloquée, jusqu'à ce que la pression de l'eau potable dans la section de conduite d'eau (03) ait excédé la limite supérieure de pression (Po) à cause de l'eau potable qui entre ;
   d) fermer manuellement la vanne d'arrêt (05) par l'opérateur (15) et ouvrir une vanne de sortie (09) ayant un taux de fuite connu (Lv), des valeurs mesurées d'une deuxième courbe de pression (17) étant ensuite mesurées au fil du temps et stockées jusqu'à ce que la pression de l'eau potable dans la section de conduite d'eau (03) ait tombée au-dessous de la limite inférieure de pression (Pu) à cause de l'eau potable qui s'écoule par la fuite (07) et l'eau potable qui s'écoule par la vanne de sortie (09),
   e) comparer les valeurs mesurées de la première courbe de pression (16) avec les valeurs mesurées de la deuxième courbe de pression (17), le taux de fuite inconnu (Lx) de la fuite (07) étant dérivé par rapport au taux de fuite connu (Lv) de la vanne de sortie (09) à partir de la comparaison des valeurs mesurées.

2. Procédé selon la revendication 1,
   **caractérisé en ce que**
   lors de la comparaison des valeurs mesurées à l'étape de procédé e), le temps de chute de pression (t1) de la première courbe de mesure (16), qui passe pendant la chute de pression entre la limite supérieure de pression (Po) et la limite inférieure de pression (Pu), et le temps de chute de pression (t2) de la deuxième courbe de mesure (17), qui passe pendant la chute de pression entre la limite supérieure de pression (Po) et la limite inférieure de pression (Pu), sont évalués.

3. Procédé selon la revendication 2,
   **caractérisé en ce que**
   le taux de fuite cherché (Lx) de la fuite (07) est calculé par rapport au taux de fuite connu (Lv) de la vanne de sortie à partir des temps de chute de pression (t1, t2) selon la formule :

$$Lx = Lv * [t2 \setminus (t1 - t2)].$$

4. Procédé selon l'une quelconque des revendications 1 à 3,
   **caractérisé en ce que**
   l'étanchéité de la vanne d'arrêt (05) est examinée au moyen d'une méthode d'essai, notamment une méthode d'essai acoustique, après avoir fermé la vanne d'arrêt (05).

5. Procédé selon l'une quelconque des revendications 1 à 3,
   **caractérisé en ce que**,
   pour mesurer l'étanchéité de la vanne d'arrêt (05), la vanne de sortie (09) ouverte est fermée et la vanne d'arrêt (05) reste fermée après qu'une limite inférieure de pression (Pu) ait été atteinte, le temps qui passe jusqu'à ce que la limite supérieure de pression (Po) ait été atteinte de nouveau étant mesuré et la qualité d'étanchéité de la vanne d'arrêt (05) étant dérivée quantitativement de cette mesure.

6. Procédé selon l'une quelconque des revendications 1 à 5,
   **caractérisé en ce que**

la vanne de sortie (09) ayant le taux de fuite connu (Lv) est raccordée à un poteau d'incendie ou une bouche d'incendie souterraine (06) d'une section de conduite (03) d'une conduite d'eau.

7. Procédé selon l'une quelconque des revendications 1 à 6,
**caractérisé en ce que**
la limite supérieure de pression (Po) et/ou la limite inférieure de pression (Pu) n'est/ne sont déterminée/s qu'après avoir enregistré les courbes de mesure.

8. Dispositif pour être utilisé lors de la mise en oeuvre du procédé selon l'une quelconque des revendications 1 à 7, comprenant

   a) un capteur de pression (10) pour mesurer la pression dans la section de conduite d'eau (03) à examiner ;
   b) un stockage de données dans lequel les valeurs mesurées d'une première et une deuxième courbe de pression (16, 17) sont au moins partiellement stockées ;
   c) au moins une vanne de sortie (09) ayant un taux de fuite connu (Lv) ;
   **caractérisé par**
   d)un dispositif d'évaluation qui est configuré pour mettre en oeuvre le procédé selon l'une quelconque des revendications 1 à 7 et au moyen duquel les valeurs mesurées de la première et la deuxième courbe de pression (16) sont évaluées lorsque le taux de fuite cherché (Lx) de la fuite (07) par rapport au taux de fuite connu (Lv) de la vanne de sortie (09) est déterminé ; et par
   e) un tube vertical qui est raccordable à un poteau d'incendie ou une bouche d'incendie souterraine (06) d'une section de conduite d'eau (03), la vanne de sortie (09) ayant le taux de fuite connu (Lv) étant raccordée au tube vertical (08).

9. Dispositif selon la revendication 8,
**caractérisé en ce que**
le dispositif a une interface de transmission de données (12) au moyen de laquelle les valeurs mesurées du capteur de pression (10) sont transmises à une sous-station (13) disposée à distance du contrôle (11) du dispositif, et/ou au moyen de laquelle des commandes de contrôle sont transmises de la sous-station (13) au contrôle (11) du dispositif.

10. Dispositif selon la revendication 9,
**caractérisé en ce que**
l'interface de transmission de données (12) permet la transmission de données sans fil.

11. Dispositif selon l'une quelconque des revendications 8 à 10,
**caractérisé en ce que**
le dispositif comprend un ou plusieurs accumulateurs pour alimenter en énergie hors réseau la vanne de sortie (09), l'interface de transmission de données (12) et/ou la sous-station (13).

12. Dispositif selon l'une quelconque des revendications 8 à 11,
**caractérisé en ce que**
le dispositif comprend un récepteur GPS au moyen duquel les coordonnées de position du dispositif sont déterminées, indiquées et/ou stockées.

13. Dispositif selon l'une quelconque des revendications 8 à 12,
**caractérisé en ce que**
le dispositif comprend un réservoir de pression ou un réservoir de dilatation qui est raccordé à la section de conduite (03) bloquée.

Fig. 1

Fig. 2

Fig. 3

$$\Delta p = \frac{1}{k} \cdot L_x \cdot t_1$$

$$\Delta p = \frac{1}{k} \cdot (L_x + L_v) \cdot t_2$$

$$\Rightarrow L_x = L_v \cdot \frac{t_2}{t_1 - t_2}$$

$$L_1 = L_x$$
$$L_2 = L_x + L_v$$

EP 3 350 560 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3905054 C1